# EUROPEAN PATENT SPECIFICATION

(11) **EP 0 400 970 B1**
(45) Date of publication and mention of the grant of the patent: **23.10.1996**
(21) Application number: 90305842.8
(22) Date of filing: 30.05.1990
(51) Int. Cl.: G11B 5/66

(54) **Perpendicular magnetic recording medium and production method thereof**
Aufzeichnungsmedium für Senkrechtmagnetisierung und Verfahren zu dessen Herstellung
Milieu d'enregistrement magnétique perpendiculaire et son procédé de fabrication

(30) Priority: 31.05.1989 JP 138273/89; 31.05.1989 JP 138274/89; 20.11.1989 JP 302719/89; 19.12.1989 JP 329240/89; 20.12.1989 JP 330667/89
(43) Date of publication of application: 05.12.1990
(73) Proprietor: FUJITSU LIMITED, Kawasaki-shi, Kanagawa 211 (JP)
(72) Inventor: Kiuchi, Katsumi, Kanagawa, 243-04 (JP); Wakamatsu, Hiroaki, Yokohama-shi, Kanagawa, 245 (JP); Suzuki, Fumitake, Kawasaki-shi, Kanagawa, 211 (JP); Koshikawa, Takao, Atsugi-shi, Kanagawa, 243-01 (JP)
(74) Representative: Fane, Christopher Robin King

(56) References cited:
- EP-A- 0 099 564
- DD-A- 240 275

## Description

The present invention relates to perpendicular magnetic recording/reproduction apparatus, for example magnetic disk apparatuses, magnetic tape apparatuses, and the like, which are used as external memory devices of a computer.

Magnetic disk apparatuses may be made compact and use high density magnetic recording and reproduction. A high density recording system which is superior to a conventional longitudinal magnetic recording system is the perpendicular magnetic recording system, in which a residual magnetization is formed in a direction perpendicular to the surface of the magnetic recording medium.

A single pole head and a ring head may be used for the perpendicular magnetic recording, and perpendicular magnetic recording media may have single or double-layered structures. A single-layer recording medium has a recording layer made of CoCr, for example. A double-layered recording medium may have a recording layer and a high permeability layer which is provided under the recording layer and is made of NiFe, for example. When carrying out perpendicular magnetic recording, optimum results may be obtained by use of a combination of the single pole head and a double-layered recording medium.

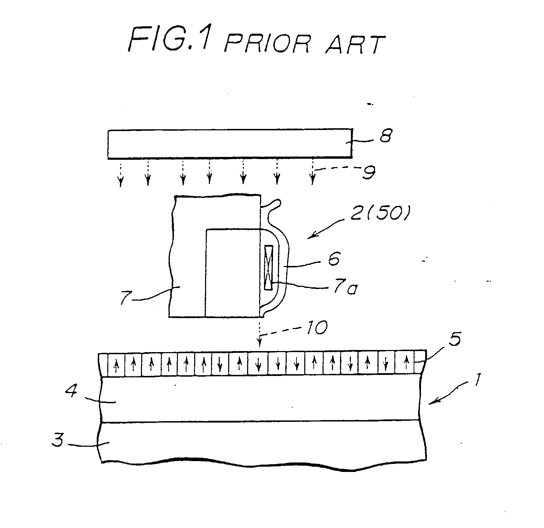

FIG. 1 of the accompanying drawings shows a double-layered perpendicular magnetic recording medium 1 and a single pole head 2. The recording medium 1 includes an Al substrate 3 which is subjected to alumite surface processing, a NiFe soft magnetic under-layer 4, and a CoCr perpendicular magnetic recording layer 5 which has perpendicular magnetic anisotropy. The head 2 includes a main pole 6, an auxiliary yoke 7, and a coil 7a. The under-layer 4, sometimes referred to as a backing layer, provides a path for magnetic flux, thereby improving the recording and reproducing sensitivity.

If a stray magnetic field source 8 exists, when carrying out the perpendicular magnetic recording and reproduction using the arrangement shown in FIG. 1, a magnetic flux 9 from the source 8 concentrates at the main pole 6, and the concentrated magnetic flux 9 easily flows to the under-layer 4 via the recording layer 5 as indicated by an arrow 10. This flow of the magnetic flux 9 can cause information recorded on the recording medium 1 to be erased.

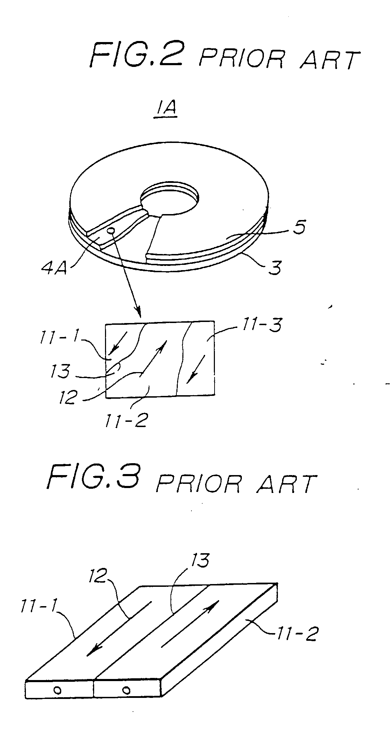

FIG. 2 shows a conventional perpendicular magnetic recording medium 1A. In FIG. 2, those parts which are essentially the same as those corresponding parts in FIG. 1 are designated by the same reference numerals, and a description thereof will be omitted. A soft magnetic under-layer 4A includes magnetic domains 11-1, 11-2, 11-3 and the like as shown in FIG. 2 and shown on an enlarged scale in FIG. 3. An arrow 12 indicates a direction of the magnetic spin. In the magnetic domains 11-1, 11-2, etc., the magnetic spin is parallel to the surface of the under-layer 4A. In addition, a domain wall 13 clearly exists between adjacent magnetic domains. The size of a magnetic domain can be of the order of several µm to several mm. Generally, the under layer 4 has a thickness of about 0.5 µm, and in order to improve the recording and reproducing sensitivity, the magnetic characteristics are set such that the permeability is 1500 or greater and the coercivity is 10 Oe or less. On the other hand, the recording layer 5 usually has a thickness of about 0.2 µm, and its perpendicular coercivity is approximately 1000 0e.

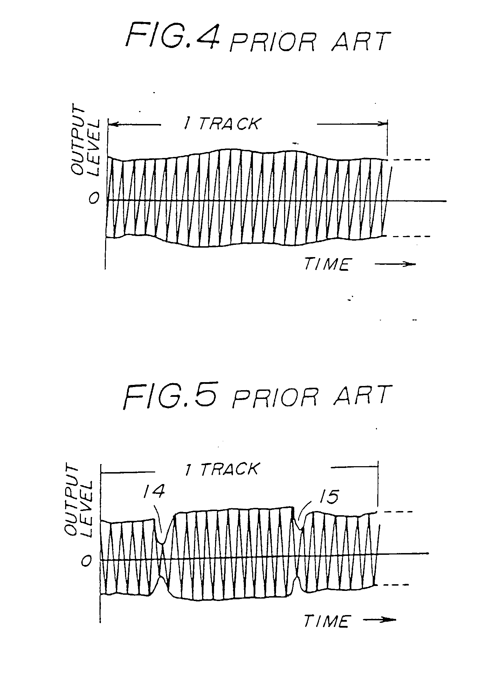

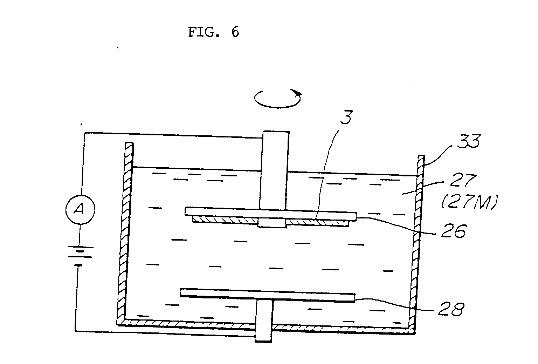

FIG. 4 shows a waveform of a signal which is reproduced from one track turn of the recording medium 1A when a signal having a constant level is recorded. FIG. 5 shows a waveform of a signal which is reproduced from the same track turn when a magnetic field of 3 0e is applied to the recording medium 1A from directly above the head 2 during the reproduction. The recording magnetic field of the head 2 at the time of the recording is set greater than the perpendicular coercivity of the recording layer 5, and is normally 2000 0e or greater. Accordingly, the external magnetic field of 3 0e is small compared to the recording magnetic field of the head 2.

However, the signal level of the reproduced signal decreases at times 14 and 15 in FIG. 5, even in response to the small external magnetic field. This decrease in the signal level is caused by the fact that the recorded information on the recording layer 5 is partially erased by the external magnetic field. Normally, a stray magnetic field in the range of 3 to 5 0e inevitably exists within the magnetic recording apparatus. As a result, the erasure of recorded information due to the stray magnetic field easily occurs with the conventional recording medium 1A, and the reliability of the recorded information is poor.

It is thought that the erasure of the recorded information due to the stray magnetic field is closely related to unpredictable motion of the domain walls in the under layer 4A. The permeability at a part of the under layer 4A temporarily becomes high when domain walls of the under layer at this part makes a random motion due to the stray magnetic field, and the information recorded at a corresponding part of the recording layer 5 is consequently erased because of the magnetic flux of the stray magnetic field flowing to that part of the underlayer 4A via the main pole 6 of the head 2.

According to the present invention there is provided a perpendicular magnetic recording medium, for use in a magnetic recording/reproducing apparatus having a perpendicular magnetic recording/reproducing head mounted to undergo relative movement adjacent to a main outer face of that medium for recording/reproducing information on the said recording medium at the said main face, which medium comprises a substrate supporting a magnetically anisotropic recording layer, providing the said main outer face and having a preferred direction of magnetisation perpendicular to that face, and also comprises a soft ferromagnetic under-layer, having a magnetic domain structure including ferromagnetic domain walls between mutually adjacent ferromagnetic domains, interposed between the recording layer and the said substrate, the coercivity of the said recording layer being greater than that of the under-layer, characterised in that the said under-layer has a permeability in the range from 50 to 800.

This choice of such an under-layer serves to resist loss of recorded information owing to movement of ferromagnetic domain walls in the said under-layer in response to motion of a stray magnetic filed through the said under-layer whenthe recording/reproducing head undergoes such relative movement.

A recording medium embodying the present invention therefore tends to suffer less, than prior perpendicular recording apparatus, from erasure of recorded information on the perpendicular magnetic recording medium due to stray magnetic fields.

For a better understanding of the invention and to show how the same may be carried into effect, reference will now be made, by way of example, to the accompanying drawings, wherein:
FIG. 1 shows diagrammatically a partial cross-sectional view of a single pole head and a prior perpendicular magnetic recording medium;
FIG. 2 shows a perspective view of the perpendicular magnetic recording medium of FIG. 1;
FIG. 3 shows a perspective view of a model of inplane magnetic domains in a soft magnetic under-layer of the perpendicular magnetic recording medium shown in FIG. 2;
FIG. 4 shows a waveform of a signal reproduced from one track turn of the perpendicular magnetic recording medium shown in FIG. 2;
FIG. 5 shows a waveform of a signal reproduced from the one track turn of the perpendicular magnetic recording medium shown in FIG. 2 in the presence of an external magnetic field of 3 0e;
FIG. 6 shows a diagrammatic cross-sectional view of a plating apparatus;
FIG. 7 shows a perspective view of a perpendicular magnetic recording medium according to an embodiment of the present invention;
FIG. 8 shows a cross-sectional view of part of the perpendicular magnetic recording medium shown in FIG. 7;
FIG. 9 shows a waveform of a signal reproduced from one track turn of the perpendicular magnetic recording medium shown in FIG. 7 under an external magnetic field of 10 0e;
FIG. 10 is a diagram for explaining results of an experiment to find a relationship between the permeability of an underlayer and the erasure of recorded information due to a stray magnetic field;
FIG. 11 shows a relationship between the erasure of recorded information and the permeability of an under-layer;
FIG. 12 is a diagram for explaining results of an experiment on a relationship between the thickness of an under-layer and the reproduced output;
FIG. 13 shows a relationship between the recording efficiency and the thickness of an underlayer;

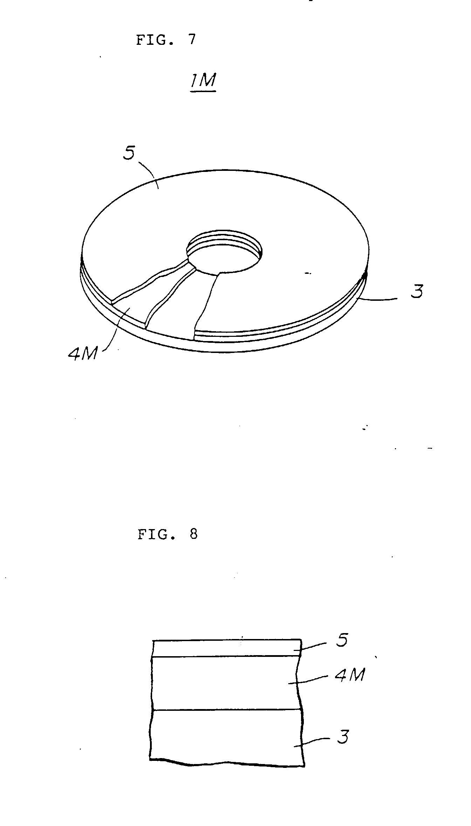

Fig. 7 shows a recording medium 1M, and Fig. 8 shows a cross section of part of the recording medium 1M on an enlarged scale. The recording medium 1M includes an Al substrate 3, which is subjected to alumite surface processing, a NiFe (Fe-81wt%Ni) under-layer 4M having a thickness of 1µm and a permeability of 800, and the CoCr recording layer 5 which has a thickness of 0.15 µm and a coercivity of 1000 Oe.

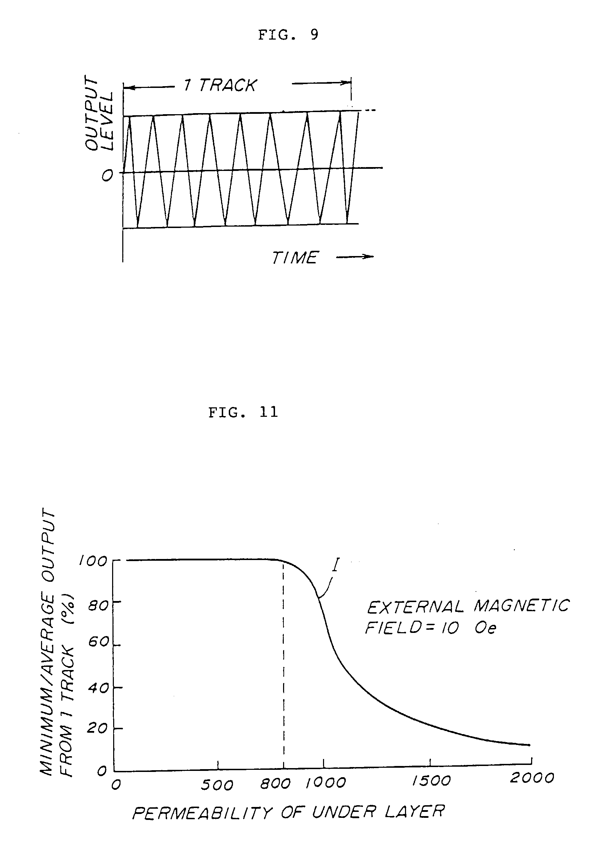

Fig. 9 shows the waveform of a signal which is reproduced from one track turn of the recording medium 1M when an external magnetic field of 10 Oe is applied on the recording medium 1M from directly above the single pole head during the reproduction. As may be seen from Fig. 9, no erasure of the recorded information takes place in the recording medium 1M even when the external magnetic field of 10 Oe is applied. Hence, the erasure of the recorded information on the recording medium 1M due to the stray magnetic field is effectively suppressed.

In addition, as may be seen by comparing Figs. 9 and 5, there is no decrease in the output signal level in Fig. 9 and approximately the same output signal level can be obtained as in the conventional case. Similar effects can be obtained when the thickness of the under-layer 4M is 1 µm or greater and the permeability is in the range of 50 to 800.

For example, the plating apparatus shown in Fig. 6 may be used to form the under-layer 4M with a permeability of 800. In this case, a NiFe conductor layer having a thickness of 1000 Å (0.1 µm) is sputtered on the substrate 3 beforehand. The substrate 3 is supported on the substrate holder 26 and positioned to confront the plating electrode 28 within the plating chamber 33 which is filled with a plating solution 27M. This plating solution 27M includes nickel sulphate (NiSo₄, 6H₂O) and ferrous sulphate (FeSO₄, 7H₂O) as the main components and has a pH of 2. The substrate 3 is rotated at 170 rpm within the plating chamber 33. In this state, the current density is 6 A/dm² and the chamber temperature is 40°C. By carrying out the electroplating under these conditions, it is possible to form the NiFe under-layer 4M having the permeability of 800 on the NiFe conductor layer.

By changing the chamber temperature, it is possible to form an under-layer having different permeabilities. For example, it is possible to form an under-layer having a permeability of 100 at a chamber temperature of 43°C.

In addition, the under-layer can of course be formed by sputtering, vapour deposition, etc., by appropriately selecting the conditions such as the substrate temperature and the target composition.

Next, a description will be given of an experiment [1] related to the relationship between the permeability of the soft magnetic under-layer and the erasure of recorded information due to the stray magnetic field.

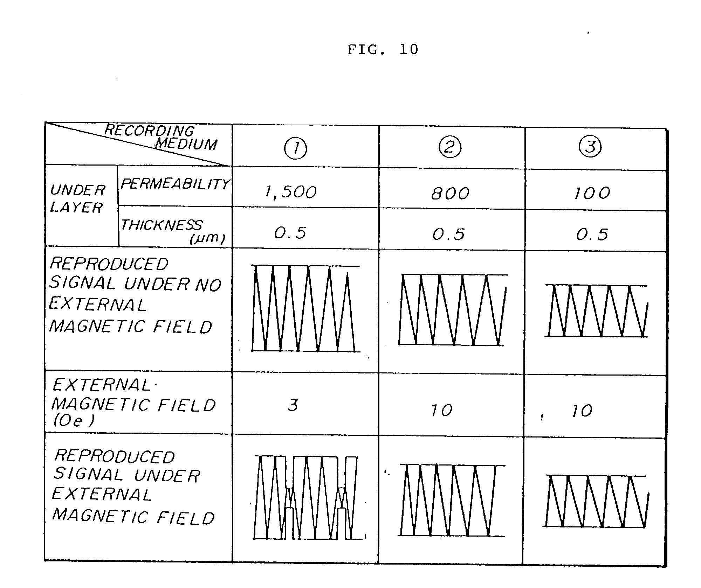

As shown in Fig. 10, the thickness of the soft magnetic under layer is fixed to 0.5 µm, and three kinds of perpendicular magnetic recording media 1, 2 and 3 respectively having permeabilities of 1500, 800 and 100 were made. The recording medium 1 corresponds to the conventional recording medium. The recording and reproduction of information on these recording media were carried out using a single pole head. In addition, an external magnetic field was applied to these recording media during the reproduction from directly above the head.

As may be seen from Fig. 10, it was confirmed that the recorded information on the recording medium 1 is partially erased when the external magnetic field is 3 Oe. The extent of the information erasure in this recording medium 1 was notable when the external magnetic field is 10 Oe.

On the other hand, it was confirmed that no erasure of recorded information takes place in the case of the recording media 2 and 3 even when the external magnetic field is 10 Oe.

Based on the results of the above described experiment [1], Fig. 11 shows a relationship between the ratio of minimum reproduced output to average reproduced output, from one track turn corresponding to one revolution of the recording medium, and the permeability of the soft magnetic under-layer. As indicated by a line I in Fig. 11, this ratio is 100% when the permeability is 800 or less, and it may be seen that no erasure of recorded information takes place under this condition.

Accordingly, in order to suppress the erasure of recorded information due to the stray magnetic field, it is desirable to set the permeability of the soft ferromagnetic under-layer to 800 or less, which is considerably smaller than the permeability of 1500 generally used in a comparable conventional recording medium.

However, as may be seen from Fig. 10, another problem arose for the recording media 2 and 3. That is, the reproduced output decreased when the permeability of the soft magnetic under-layer is set to 800 or less. It is desirable to overcome this problem.

Next, a description will be given of an experiment [2] related to the relationship of the thickness of the soft magnetic under-layer and the reproduced output when the permeability of the soft magnetic under layer is set in the order of 100.

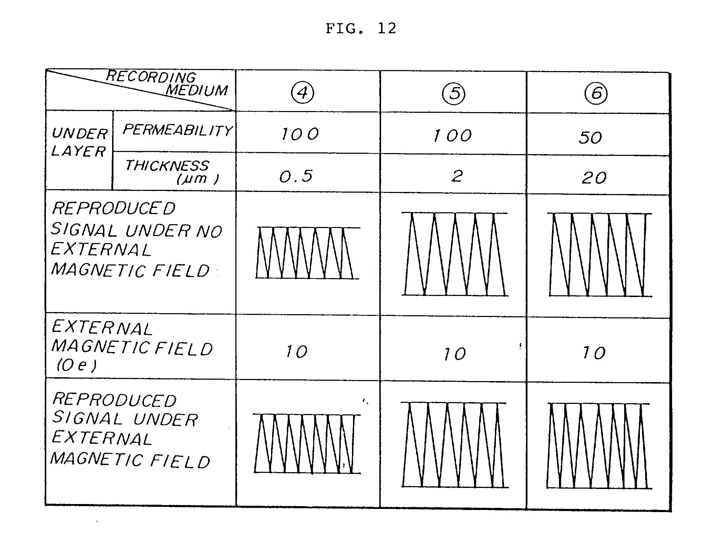

As shown in Fig. 12, the permeability of the soft magnetic under-layer is selected to be 100, and two kinds of perpendicular magnetic recording media 4 and 5 respectively having thicknesses of 0.5 µm and 2 µm were made. Another perpendicular magnetic recording medium 6 was made in which the soft magnetic under layer has a permeability of 50 and a thickness of 20 µm.

The recording and reproduction of information on these recording media were carried out using a single pole head. In addition, an external magnetic field of 10 Oe was applied to these recording media during the reproduction from directly above the head. Two important facts were confirmed from this experiment [2].

First, as confirmed in the experiment [1] described above, no erasure of recorded information takes place in the case of the recording media 4, 5 and 6.

Second, it was confirmed that the reproduced output increases when the thickness of the soft magnetic under layer is set to 2 µm or 20 µm, which values are notably larger than the thickness of 0.5 µm which is generally used in a comparable conventional recording medium.

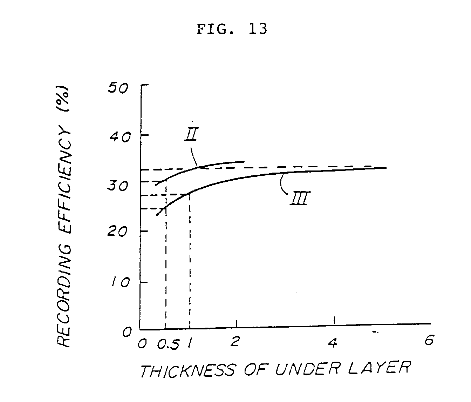

Based on the results of the experiment [2], Fig. 13 shows the relationship between the recording efficiency (effective utilization of the head magnetomotive force) and the thickness of the soft magnetic under-layer. In Fig. 13, a line II shows the relationship for the case where the permeability of the soft magnetic under layer is 1500, and a line III shows the relationship for the case where the permeability of the soft magnetic under layer is 100. It may be seen from the line II that the recording efficiency is 30 % when the permeability is 1500 and thickness of the soft magnetic under layer is 0.5 µm as in the typical case of a conventional recording medium. On the other hand, it may be seen from the line III that the recording efficiency gradually increases when the permeability is 100 and the thickness of the soft magnetic under layer is under 4 µm, and that the recording efficiency exceeds the conventional recording efficiency of 30 % when the thickness of the soft magnetic under layer exceeds 4 µm. In addition, although the recording efficiency is approximately 25 % and insufficient when the thickness of the soft magnetic under layer is 0.5 µm, it was confirmed that the recording efficiency becomes approximately 28 % and satisfactory when the thickness is approximately 1 µm. Furthermore, although there is no maximum limit of the thickness of the soft magnetic layer, it is desirable from the point of view of the production efficiency and production cost that the thickness is 20µm or less as in the case of the recording medium 6.

Accordingly, it is possible to obtain a desired recording efficiency comparable to that of the conventional recording medium when the permeability and thickness of the soft magnetic under-layer are set respectively in the ranges from 50 to 800 and from 1 µm to 50 µm.

Therefore, according to the described embodiments, it is not only possible to suppress the erasure of recorded information on the recording medium but also possible to obtain a sufficiently high recording efficiency. As a result, the reliability and performance of the recorded information on the recording medium are greatly improved.

The recording medium in an embodiment of the present invention need not necessarily be in the form of a disk. Similar effects are also obtainable when the present invention is applied to other types of recording media, such as a perpendicular magnetic tape.

Moreover, the materials used for the substrate, the soft magnetic under-layer and the magnetic recording layer are not limited to those described above.

For example, the substrate may be made of a rigid material or a flexible material. The rigid material may be selected from a group including reinforced glass, aluminium, nickel plated aluminium, aluminium subjected to alumite processing, ceramics (alumina etc.) and glass glazed ceramics. The flexible material may be selected from a group including organic film such as polyimide and polyethylene naphthalene.

The soft ferromagnetic under-layer may be made of a material selected from a group including Ni, NiFe, Co, CoZr system materials, CoFe, Fe, FeN, FeSiAl and FeSiAlN. The CoZr system materials include CoZrCr, CoZrNb and the like.

The magnetic recording layer may be made of a material selected from a group including Co system materials, FeCoO, CoNiReP, Ba ferrite and the like. The Co system materials include CoCr, CoCrTa and the like, each of which includes Co and at least one of Cr, Mo, V, W, Cu, Al, Ti, Ru, Rh, Re, Os, Ir, Nb, Ta, Zr and Pt.

## Claims

1. A perpendicular magnetic recording medium, for use in a magnetic recording/reproducing apparatus having a perpendicular magnetic recording/reproducing head (2,50) mounted to undergo relative movement adjacent to a main outer face of that medium for recording/reproducing information on the said recording medium at the said main face, which medium comprises a substrate (3) supporting a magnetically anisotropic recording layer (5), providing the said main outer face and having a preferred direction of magnetisation perpendicular to that face, and also comprises a soft ferromagnetic under-layer (4M), having a magnetic domain structure including ferromagnetic domain walls between mutually adjacent ferromagnetic domains, interposed between the recording layer (5) and the said substrate (3), the coercivity of the said recording layer (5) being greater than that of the under-layer (4M), characterised in that the said under-layer (4M) has a permeability in the range from 50 to 800.

2. A recording medium as claimed in claim 1, wherein the thickness of the said under-layer (4M) is in the range from 1 to 50 µm.

3. A recording medium as claimed in claim 1 or 2, in operative combination with such a recording/reproducing apparatus, wherein the strength of the said stray magnetic field as measured directly above the recording/reproducing head is no greater than 10 Oe.

4. A recording medium as claimed in claim 1 or 2, in operative combination with such a recording/reproducing apparatus, wherein the strength of the said stray magnetic field as measured directly above the recording/reproducing head is in the range from 3 to 5 Oe.

5. A recording medium as claimed in any one of claims 1 to 4, being disc-shaped and having recording tracks formed concentrically on the said recording layer (5).

## Patentansprüche

1. Senkrechtmagnetaufzeichnungsmedium zur Verwendung in einer Magnetaufzeichnungs-/Wiedergabevorrichtung, die einen Senkrechtmagnetaufzeichnungs-/Wiedergabekopf (2, 50) hat, der so befestigt ist, daß er benachbart zu einer äußeren Hauptfläche des Mediums einer Relativbewegung zur Aufzeichnung/Wiedergabe von Information auf dem Aufzeichnungsmedium auf dieser Hauptfläche unterzogen wird, welches Medium ein Substrat (3) umfaßt, das eine magnetisch anisotrope Aufzeichnungsschicht (5) trägt, welche die äußere Hauptfläche bildet und eine bevorzugte Richtung der Magnetisierung senkrecht zu dieser Fläche hat, und ferner eine weichferromagnetische Unterschicht (4M) umfaßt, die eine Magnetdomänenstruktur hat, welche ferromagnetische Domänenwände zwischen wechselseitig benachbarten ferromagnetischen Domänen enthält, die zwischen die Aufzeichnungsschicht (5) und das Substrat (3) gelegt ist, bei welchem die Koerzitivkraft der Aufzeichnungsschicht (5) größer ist als diejenige der Unterschicht (4M), dadurch gekennzeichnet, daß die Unterschicht (4M) eine Permeabilität im Bereich von 50 bis 800 hat.

2. Aufzeichnungsmedium nach Anspruch 1, bei welchem die Dicke der Unterschicht (4M) im Bereich von 1 bis 50 µm liegt.

3. Aufzeichnungsmedium nach Anspruch 1 oder 2 in operativer Kombination mit einer derartigen Aufzeichnungs-/Wieder-gabevorrichtung, bei welchem die Stärke des Streumagnetfeldes direkt oberhalb des Aufzeichnungs-/Wiedergabekopfes gemessen nicht größer ist als 10 Oe.

4. Aufzeichnungsmedium nach Anspruch 1 oder 2 in operativer Kombination mit einer solchen Aufzeichnungs-/Wieder-gabevorrichtung, bei welcher die Stärke des Streumagnetfeldes unmittelbar oberhalb des Aufzeichnungs-/Wiedergabekopfes gemessen im Bereich von 3 bis 5 Oe liegt.

5. Aufzeichnungsmedium nach einem der Ansprüche 1 bis 4, das eine Plattenform hat und Aufzeichnungsspuren hat, die konzentrisch auf der Aufzeichnungsschicht (5) ausgebildet sind.

## Revendications

1. Support d'enregistrement magnétique perpendiculaire, pour une utilisation dans un appareil d'enregistrement reproduction magnétique comportant une tête d'enregistrement/ reproduction magnétique perpendiculaire (2, 50) montée pour subir un déplacement relatif de manière adjacente à une face externe principale de ce support d'enregistrement pour enregistrer/reproduire une information sur ledit support d'enregistrement au niveau de ladite face principale, lequel support d'enregistrement comprend un substrat (3) supportant une couche d'enregistrement magnétiquement anisotrope (5), constituant ladite face externe principale et présentant une direction de magnétisation préférée perpendiculaire à cette face, et comprend également une sous-couche ferro-magnétique douce (4M) présentant une structure de domaines magnétiques incluant des parois de domaines ferro-magnétiques entre des domaines ferro-magnétiques mutuellement adjacents, interposées entre la couche d'enregistrement (5) et ledit substrat (3), la coercivité de ladite couche d'enregistrement (5) étant supérieure à celle de la sous-couche (4M), caractérisé en ce que ladite sous-couche (4M) présente une perméabilité dans la plage de 50 à 800.

2. Support d'enregistrement selon la revendication 1, dans lequel l'épaisseur de ladite sous-couche (4M) est dans la plage de 1 à 50 µm.

3. Support d'enregistrement selon la revendication 1 ou 2, en combinaison opérationnelle avec un tel appareil d'enregistrement/reproduction, où l'intensité dudit champ magnétique parasite telle que mesurée directement au-dessus de la tête d'enregistrement/reproduction n'est pas supérieure à 10 Oe.

4. Support d'enregistrement selon la revendication 1 ou 2, en combinaison opérationnelle avec un tel appareil d'enregistrement/reproduction, où l'intensité dudit champ magnétique parasite telle que mesurée directement au-dessus de la tête d'enregistrement/reproduction est dans la plage de 3 à 5 Oe.

5. Support d'enregistrement selon l'une quelconque des revendications 1 à 4, qui est sous forme de disque et qui comporte des pistes d'enregistrement formées de façon concentrique sur ladite couche d'enregistrement (5).
